# FASCICULE DE BREVET EUROPEEN

(11) **EP 2 822 873 B1**
(45) Date de publication et mention de la délivrance du brevet: **20.07.2016**
(21) Numéro de dépôt: 13709165.8
(22) Date de dépôt: 04.03.2013
(51) Int. Cl.: B65D 83/62, B65D 83/32, B65D 83/42, B65D 83/48, B65D 83/38

(54) **BAGUE POUR FIXER UNE POCHE DANS UN FLACON**
EINSATZ ZUR BEFESTIGUNG EINES BEUTELS IN EINER DOSE
INSERT FOR FIXING A BAG WITHIN A BOTTLE

(30) Priorité: 05.03.2012 FR 1251971
(43) Date de publication de la demande: 14.01.2015
(73) Titulaire: Lindal France SAS, 54150 Briey (FR)
(72) Inventeur: BODET, Hervé, 55100 Verdun (FR); PELTIER, Jérôme, 54980 Batilly (FR)
(74) Mandataire: Vièl, Frédérique
(86) Numéro de dépôt international: PCT/EP2013/054255
(87) Numéro de publication internationale: WO 2013/131846

(56) Documents cités:
- EP-A1- 0 776 834
- WO-A1-00/63093
- WO-A1-02/16224
- WO-A2-2012/158741
- GB-A- 2 420 554
- US-A- 4 949 871
- US-A1- 2006 049 205
- US-B1- 6 505 986

## Description

L'invention concerne une bague de fixation pour fixer une poche dans un récipient constitué d'un flacon muni d'une ouverture supérieure pouvant être fermée par des moyens d'extraction éventuellement montés sur une coupelle.

Dans les flacons sous pression, il est courant de placer le produit à extraire dans une poche souple placée à l'intérieur d'un boîtier. Dans la grande majorité des cas, la poche est fixée directement sur le corps de la valve. On citera à titre d'exemple le document EP 1 966 064 A1. Dans ce cas, le produit doit être introduit dans la poche en passant à travers la valve. Le passage étant étroit, cela nécessite une forte pression et le temps de remplissage est assez long.

Dans certains cas cependant, la valve n'est pas conçue pour recevoir une poche. C'est le cas par exemple des valves à gros débit.

Dans ce cas, la poche est fixée directement sur le boîtier, à la jonction entre la coupelle portant les moyens d'extraction et le col du flacon.

Par ailleurs, lorsque les poches se vident, il arrive qu'elles se recroquevillent sur elles-mêmes en formant des zones isolées qui n'ont plus accès à la valve. Le produit ne peut pas sortir de ces zones isolées et le taux de restitution s'en voit diminué. Plusieurs solutions ont été proposées qui peuvent être regroupées en deux catégories : les moyens anti-affaissement radial et les moyens anti-affaissement longitudinal. Les moyens anti-affaissement radial accompagnent la rétractation verticale de la poche tout en l'empêchant de se rétracter radialement. Parmi ces moyens anti-affaissement radial, on trouve notamment des éléments ressort de large diamètre et aux spires très écartées, comme dans le document WO 2008/110600 A1. Dans US 4,062,475, le ressort est constitué par le tube plongeur enroulé en forme de ressort. Lorsque la poche se vide, le fond de celle-ci remonte vers la valve, accompagnée par le ressort qui se déforme au fur et à mesure que la poche se vide sous l'effet du gaz propulseur. Par contre, la poche ne peut pas s'affaisser radialement au-delà du diamètre du ressort. Même totalement écrasé, le ressort présente toujours une certaine hauteur, de sorte qu'il reste un volume mort important dans la poche vide.

Les moyens anti-affaissement longitudinal permettent à la poche de se déformer radialement en direction de l'axe central du boîtier tout en conservant sensiblement son déploiement en hauteur. On trouve parmi eux les tubes plongeurs ouverts à leur extrémité inférieure et fixés par leur extrémité supérieure au corps de valve. Dans une version améliorée connue de US 4,148,416, le tube est muni de rainures verticales et/ou d'ouvertures réparties sur une partie ou la totalité du tube. Ainsi au fur et à mesure que la poche se vide, elle peut s'écraser vers le tube plongeur, mais elle ne peut pas remonter vers la valve. Si des zones isolées se forment, elles sont tout de même en contact avec la valve via les ouvertures réparties sur toute la hauteur du tube plongeur ou les rainures conduisant à l'ouverture inférieure du tube plongeur. Dans un des exemples du document US 4,148,416, le tube n'est pas fixé sur la valve, mais flotte librement dans la poche de sorte que l'extrémité supérieure se trouve à proximité de la valve et l'extrémité inférieure se trouve près du fond de la poche. Ce tube a toujours pour fonction de faciliter l'acheminement du produit vers la valve. Dans ce type de moyens anti-affaissement, le volume mort est constitué par le tube. Il est donc plus faible que celui des moyens anti-affaissement radial. Cependant, si la poche vient se coller contre le tube elle bouche l'accès aux ouvertures et l'efficacité du tube plongeur est réduite.

Tous ces moyens anti-affaissement radial, lorsqu'ils sont fixés, le sont directement sur la valve.

Le document WO 00/63093 A1 décrit une bague selon le préambule de la revendication 1.

L'objectif de l'invention est de développer une bague selon le préambule qui permette la fixation de moyens anti-affaissement radial même lorsque les moyens d'extraction n'offrent pas de prise pour ceux-ci. Un deuxième objectif est de diminuer le risque de formation de zones isolées sans contact avec les moyens d'extraction. Un troisième objectif est d'offrir des passages les plus larges possible au produit pour pénétrer dans la poche ou quitter celle-ci.

Le premier objectif est atteint par une bague selon la revendication 1.

Grâce à la collerette, il est possible de fixer la bague dans le sertissage de la coupelle et du flacon. Les dimensions de la partie tubulaire supérieure sont donc indépendantes de la forme des moyens d'extraction ou de la coupelle sur laquelle ils peuvent être montés.

Avec le tenon, il est possible de fixer un tube plongeur ou des moyens anti-affaissement, même si les moyens d'extraction ne permettent pas la fixation de tels tubes plongeurs ou moyens anti-affaissement.

Des ailettes sont prévues dans la partie pour fixer la poche. Les ailettes sont disposées à l'opposé l'une de l'autre par rapport à l'axe central de la partie pour fixer la poche. La partie pour fixer la poche présente alors une section transversale en forme de bateau.

Afin de faciliter l'accès à la partie de la poche située en haut du tenon, on prévoit des ouvertures dans la partie inférieure des ailettes, à la jonction entre la partie pour fixer la poche et le tenon, pour mettre en contact l'intérieur et l'extérieur de la bague.

L'élément supérieur tubulaire peut comprendre une gorge annulaire radiale dimensionnée pour permettre l'encliquetage de la bague sur l'ouverture supérieure du flacon. Cette gorge radiale facilite le maintien en place de la bague lors du conditionnement du récipient.

Concrètement, une bague conforme à l'invention est constituée d'une première partie dite chapeau dont l'extrémité supérieure porte la collerette et dont l'extrémité inférieure est en partie fermée par un fond, laquelle première partie se prolonge à partir du fond par une seconde partie, dite oeillet, munie sur sa surface extérieure de la partie de fixation pour la poche et dont la section transversale est inférieure à la section transversale du chapeau, ledit oeillet se prolongeant à l'opposé du chapeau par une troisième partie dite tenon dont la section transversale est inférieure à la section transversale du chapeau et de préférence à celle de l'oeillet, un canal central traversant de part en part la bague depuis la collerette jusqu'à l'extrémité libre du tenon.

Pour faciliter la pénétration du produit dans la poche, puis son extraction, il est préférable de prévoir une ou plusieurs fentes longitudinales dans le tenon, lesquelles fentes commencent de préférence au niveau de la jonction entre la partie pour fixer la poche et le tenon, de préférence dans le prolongement des ouvertures situées dans le bas des ailettes lorsqu'il y en a.

Pour assurer une bonne fixation des moyens anti-affaissement sur la bague, il est préférable que le tenon soit muni de moyens pour fixer un tube plongeur ou un dispositif anti-affaissement. Ces moyens de fixation peuvent être notamment conçus sous la forme d'un filetage réalisé sur la face extérieure du tenon. Ils peuvent être également conçus sous la forme d'un épaulement qui peut prendre la forme d'un anneau d'extrémité fixé sur le tenon à la suite des fentes longitudinales.

En général, la bague est livrée munie d'une poche contenant un tube plongeur ou des moyens anti-affaissement fixés sur le tenon de la bague. Le tube plongeur ou les moyens anti-affaissement présentent un canal central dont une extrémité peut être munie de moyens pour les fixer à la bague de sorte que le canal central, à l'état monté dans un flacon, soit en contact avec l'intérieur de la bague et avec les moyens d'extraction.

Dans un premier exemple de réalisation, les moyens anti-affaissement sont constitués par un ressort hélicoïdal aux spires écartées les unes des autres de sorte à former une fente hélicoïdale tout le long du ressort mettant en contact l'intérieur du canal central formé par le ressort et l'extérieur du ressort, les spires restant non jointives quelles que soient les contraintes externes auxquelles est soumis le ressort lors d'un usage conforme.

Dans un deuxième exemple de réalisation, les moyens anti-affaissement sont constitués par un tube ajouré muni sur au moins une partie de sa longueur et une partie de sa périphérie de perforations qui mettent en contact l'intérieur du canal central et l'extérieur du tube ajouré, des moyens de fixation étant de préférence prévus à l'une de ses extrémités pour le fixer au tenon de la bague.

L'invention est décrite plus en détail ci-dessous à l'aide d'un exemple de réalisation.

### Les figures montrent :

- Figure 1 :: une vue en coupe d'un flacon muni d'une bague selon un premier mode de réalisation et d'un ressort anti-affaissement ;

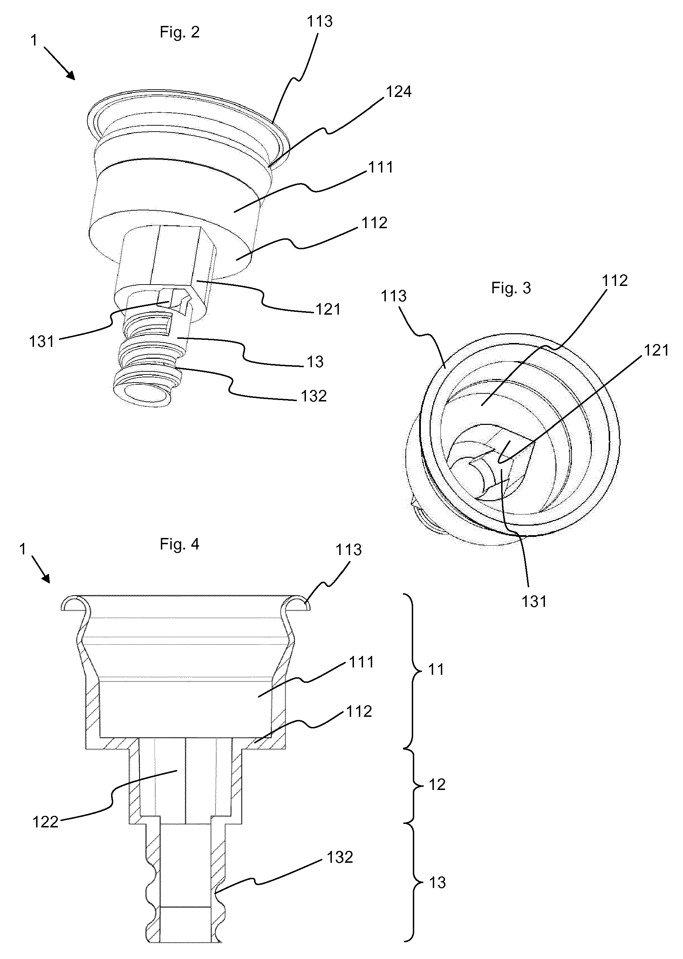

- Figure 2 :: une vue en perspective du dessous de la bague de la figure 1 ;
- Figure 3 :: une vue en perspective du dessus de la bague de la figure 1 ;
- Figure 4 :: une vue en coupe à travers la bague de la figure 1 ;
- Figure 5 :: une vue en coupe à travers une valve à gros débit montée sur une coupelle ;
- Figure 6 :: une vue agrandie de la jonction entre la coupelle et le boîtier avec interposition d'une bague conforme à l'invention a) avec un joint et b) sans joint ;
- Figure 7 :: une vue en coupe de la bague de la figure 1 munie d'un ressort anti-affaissement et d'une valve faible débit ;
- Figure 8 :: une vue en coupe d'un flacon muni d'une bague selon un deuxième mode de réalisation et d'un tube anti-affaissement ;
- Figure 9 :: une vue en perspective du dessous de la bague de la figure 8 ;
- Figure 10 :: une vue en perspective du dessus de la bague de la figure 8 ;
- Figure 11 :: une vue en coupe à travers la bague de la figure 8 ;
- Figure 12 :: une vue en perspective de la bague de la figure 8 munie d'un ressort anti-affaissement ;
- Figure 13 :: une vue de face du tube anti-affaissement de la figure 8 ;
- Figure 14 :: une vue en coupe du tube selon la coupe DD de la figure 13 ;
- Figure 15 :: l'agrandissement E de la figure 14 ;
- Figure 16 :: une vue de côté du flacon de la figure 8 ;
- Figure 17 :: l'agrandissement G de la figure 16 ; et
- Figure 18 :: une vue du flacon lors du remplissage.

L'invention concerne une bague (1, 8) pour la fixation d'une poche (2) dans un flacon (4), notamment un flacon sous pression. Conformément à l'invention, la bague est munie de moyens de fixation pour un élément anti-affaissement axial (6, 6', 9), c'est-à-dire un élément qui empêche la poche, lors du prélèvement, de se recroqueviller trop sur elle-même dans le sens vertical. La bague est conçue principalement pour une valve à gros débit. Elle peut cependant également être utilisée avec tout autre moyen d'extraction tel que des valves à petit débit, ou dans des récipients sans pression munis de pompes.

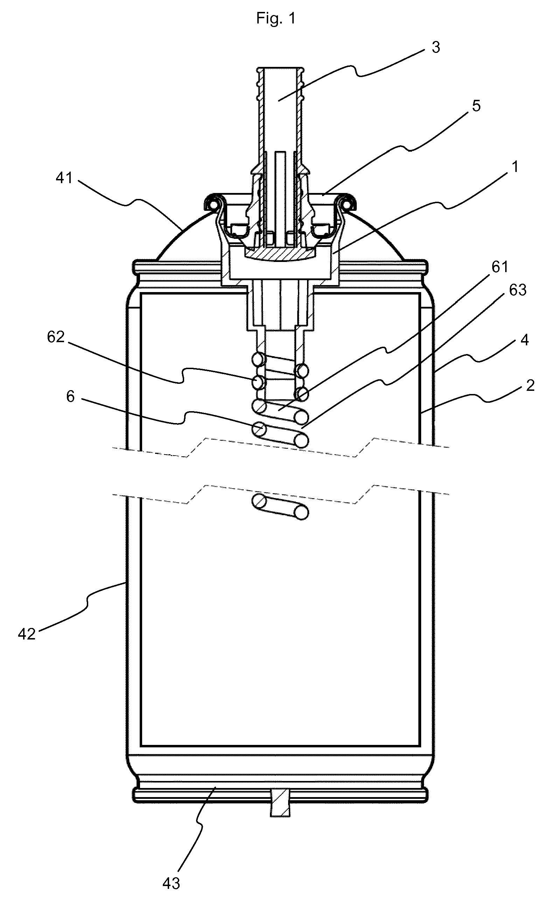

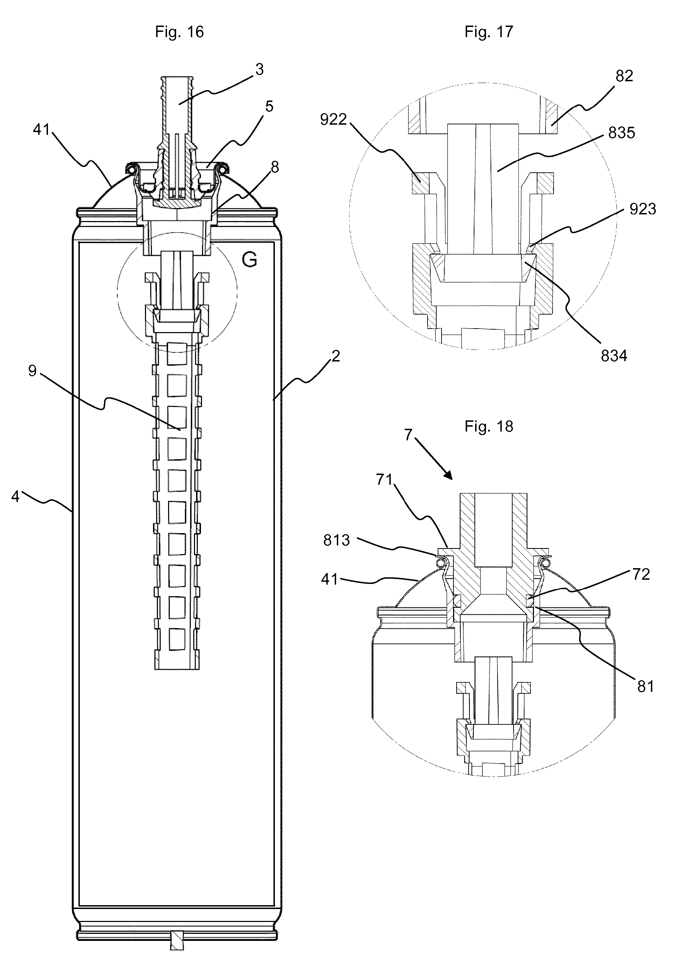

La poche (2), représentée schématiquement aux figures 1 et 16, sert à séparer le produit à conserver du gaz propulseur contenu dans l'espace situé entre la poche (2) et le boîtier (4). La poche est réalisée dans un matériau flexible étanche. Elle est fabriquée en général en superposant deux couches qui sont soudées ensemble par leur circonférence en laissant une ouverture pour laisser un passage à la bague (1, 8) sur laquelle elle est soudée.

Le boîtier (4) présenté ici est constitué d'un dôme (41) muni de l'ouverture pour la fixation de la coupelle (5), d'une partie centrale sensiblement cylindrique (42) et d'un fond (43). Le dôme (41) et le fond (43) sont sertis chacun à une extrémité de la partie cylindrique (42). L'ouverture réalisée dans le dôme (41) constitue le col du boîtier. Elle est constituée par un rebord roulé. Il va de soi que n'importe quel autre type de flacon peut convenir, du moment qu'il présente une ouverture apte à coopérer avec les moyens de fixation des moyens d'extraction.

La valve gros débit (3) présentée aux figures 1, 5, 8 et 16 est constituée d'une tige (31) rigide enserrée dans un manchon souple appelé grommet (32). Le grommet présente sur sa face externe une fente en partie radiale dans laquelle pénètre le bord intérieur de la coupelle (5) en assurant d'une part la liaison valve/coupelle et d'autre part l'étanchéité entre l'intérieur et l'extérieur de la coupelle. La tige (31) est fabriquée dans un matériau rigide, tel que du polypropylène (PP), du polyéthylène haute densité (PEHD) ou du polyéthylène (PE), qui peut être à l'état naturel ou chargé en fibres de verre par exemple. Le grommet (32) est fabriqué dans un matériau élastique. La tige est constituée d'une partie tubulaire fermée dans le bas par un fond (311) débordant radialement vers l'extérieur au-delà du diamètre général de la partie tubulaire. Ce bord saillant vient en appui contre la face inférieure du grommet (32). Plusieurs ouvertures (312) sont réalisées dans le bas de la partie tubulaire, directement au-dessus du fond, mettant ainsi en contact l'intérieur de la partie tubulaire et l'extérieur de la tige. Pour ouvrir la valve, il faut appuyer vers le bas sur la tige. Le grommet (32) se déforme et le bord saillant du fond de la tige quitte la face inférieure du grommet. Les quatre ouvertures sont ainsi libérées et le produit peut traverser la valve en contournant le bord saillant, en traversant les ouvertures, en remontant dans la partie tubulaire de la tige et en sortant par le haut de la tige.

Comme on le voit, il n'est pas possible de fixer une poche ou un élément anti-affaissement sur ce type de valve faute d'élément saillant sur lequel les fixer.

Il faut donc faire appel à une bague de fixation. Dans les exemples de réalisation, la bague (1, 8) se compose essentiellement d'une partie dite chapeau (11,81), d'une partie dite oeillet (12, 82) et d'un tenon (13, 83) pour la fixation des moyens anti-affaissement (6, 6', 9).

Le chapeau (11, 81) est constitué principalement d'une partie centrale cylindrique (111, 811) ouverte sur le dessus et partiellement fermée dans le bas par un fond (112, 812). Le bord supérieur de la partie cylindrique (111, 811) s'écarte vers l'extérieur en formant une collerette (113, 813). L'oeillet (12, 82) est placé sur la face inférieure du fond (112, 812). Cet oeillet est un élément tubulaire ouvert à ses deux extrémités. Il est raccordé par sa partie supérieure au fond (112, 812) de sorte qu'il débouche dans le chapeau (11, 81).

La poche (2) est représentée schématiquement sur les figures 1 et 16. Elle est fixée, de préférence par soudage, sur la face extérieure de l'oeillet (12, 82). Pour faciliter cette fixation et lui assurer une grande résistance, on a placé sur la surface extérieure de l'oeillet deux ailettes (121, 821) verticales et pointues, placées à l'opposé l'une de l'autre. Ces ailettes confèrent à l'oeillet une section transversale (c'est-à-dire dans le plan horizontal) en forme de bateau. Il faut comprendre par là que la section transversale est sensiblement en forme de losange dont les angles aux extrémités de la petite diagonale sont obtus et arrondis, tandis que les angles aux extrémités de la grande diagonale sont aigus et en pointe. Cette forme en bateau est plus marquée sur la bague (1) du premier mode de réalisation que sur la bague (8) du deuxième mode de réalisation. Le plan de la poche à souder est aligné avec le plan passant par les extrémités des deux ailettes (121, 821) de sorte que la jonction entre la soudure des deux pans de poche l'un sur l'autre et la soudure des pans de poche sur l'oeillet (12, 82) se fait sous un angle aussi plat que possible (considéré au niveau de chaque pan de la poche). Pour économiser de la matière, la section transversale du canal central au niveau de l'oeillet (12, 82) présente la même section en forme de bateau que la section extérieure de l'oeillet. Il aurait cependant été possible de donner à la section transversale du canal (122, 822) une forme circulaire au niveau des ailettes.

L'intérêt de l'oeillet (12, 82) est de déplacer vers le bas la zone de fixation de la poche. Cela est préférable dans des cas comme celui présenté ici en raison de la présence du dôme (41). Si la poche est rectangulaire, comme c'est le cas ici, son déploiement serait gêné par le dôme. Grâce au chapeau et à l'oeillet, la zone de fixation est descendue et se trouve au niveau de la partie cylindrique (42) du boîtier.

L'expérience a montré que lorsque la poche se vide, elle risque de s'affaisser sur elle-même en formant des recoins isolés du reste de la poche et de l'ouverture de sortie des moyens d'extraction. Le produit contenu dans ces zones isolées ne peut pas sortir et le taux de restitution s'en voit réduit. Des moyens anti-affaissement peuvent donc être prévus à l'intérieur de la poche.

Pour fixer des moyens anti-affaissement (6, 6'), on a prévu sur la bague de fixation (1, 8) un tenon (13, 83) dans le prolongement de l'oeillet (12, 82). Ce tenon permet de fixer soit un tube plongeur, soit des moyens anti-affaissement. Ce tenon (13, 83) est ouvert à ses deux extrémités de sorte que son extrémité supérieure débouche à l'intérieur de l'oeillet, au niveau de l'extrémité inférieure de ce dernier. Lorsque le tenon (13, 83) sert à la fixation de moyens anti-affaissement, il est préférable de prévoir une ou plusieurs ouvertures (131, 831) à la jonction entre l'oeillet (12, 82) et le tenon (13, 83) pour permettre au produit situé autour du tenon de pénétrer dans la bague. Lorsque la bague n'est pas munie d'oeillet, le tenon est fixé dans le prolongement de la partie cylindrique (11, 81) et les ouvertures peuvent être prévues à la jonction entre la partie cylindrique et le tenon. Dans les exemples présentés ici, les ouvertures (131, 831) sont réalisées dans la partie inférieure des ailettes (121, 821), au niveau de la jonction entre l'oeillet (12, 82) et le tenon (13, 83).

Comme on le voit, la bague est donc traversée de part en part par un canal central qui s'ouvre d'un côté au niveau de la collerette et de l'autre à l'extrémité inférieure du tenon.

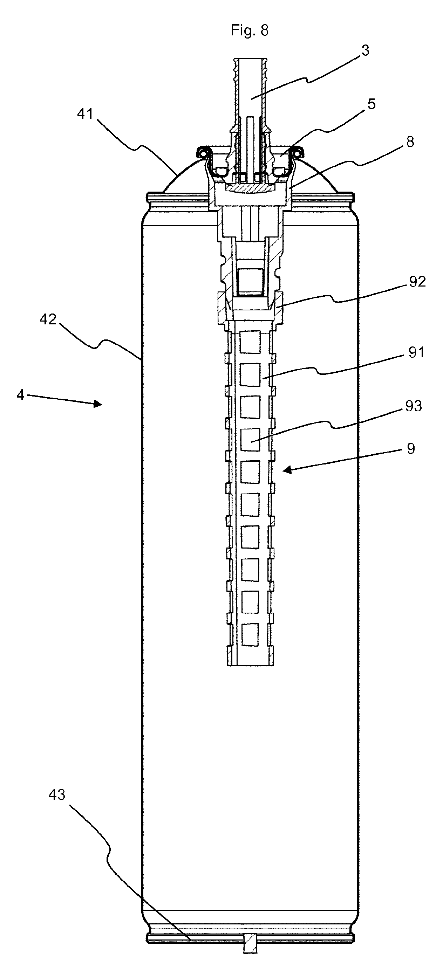

Afin de faciliter le conditionnement du flacon, la partie cylindrique (111, 811) de la bague est munie dans sa partie supérieure, un peu en dessous de la collerette (113, 813), d'une gorge radiale (114, 814) dont le fond à un diamètre supérieur au diamètre du reste de la partie cylindrique. Cette gorge radiale (114, 814) a pour but d'encliqueter la bague (1, 8) sur le col du flacon lors de son insertion, comme on peut le voir sur les figures 1 et 8 par exemple. Elle facilite également le dudgeonnage de la coupelle portant la valve sur le boîtier.

Si le produit contenu dans la poche (2) est particulièrement épais, comme c'est le cas par exemple de la pâte à churros, on peut prévoir en plus des ouvertures (131, 831) une ou plusieurs fentes longitudinales (833) réalisées dans le tenon (83). Ces fentes peuvent s'étendre depuis la jonction entre le tenon (83) et l'oeillet (82) sur une certaine longueur du tenon. Dans le cas représenté aux figures 8 à 17, ces fentes, au nombre de deux, s'étendent sur pratiquement toute la hauteur du tenon et se terminent au niveau d'un anneau (834) d'extrémité. Cet anneau d'extrémité est donc fixé à la bague par deux parois (835) qui sont décalées de 90° par rapport aux ailettes (121, 821). Les deux fentes longitudinales (833) sont situées dans le prolongement des ouvertures (831).

Les moyens anti-affaissement longitudinal (6, 6', 9), de même qu'un tube plongeur, présentent un canal central (61, 61', 91) dont une extrémité (62, 62', 62) est munie de moyens pour le fixer à la bague de sorte que le canal central des moyens anti-affaissement, à l'état monté dans un flacon, soit en contact avec les moyens d'extraction (2).

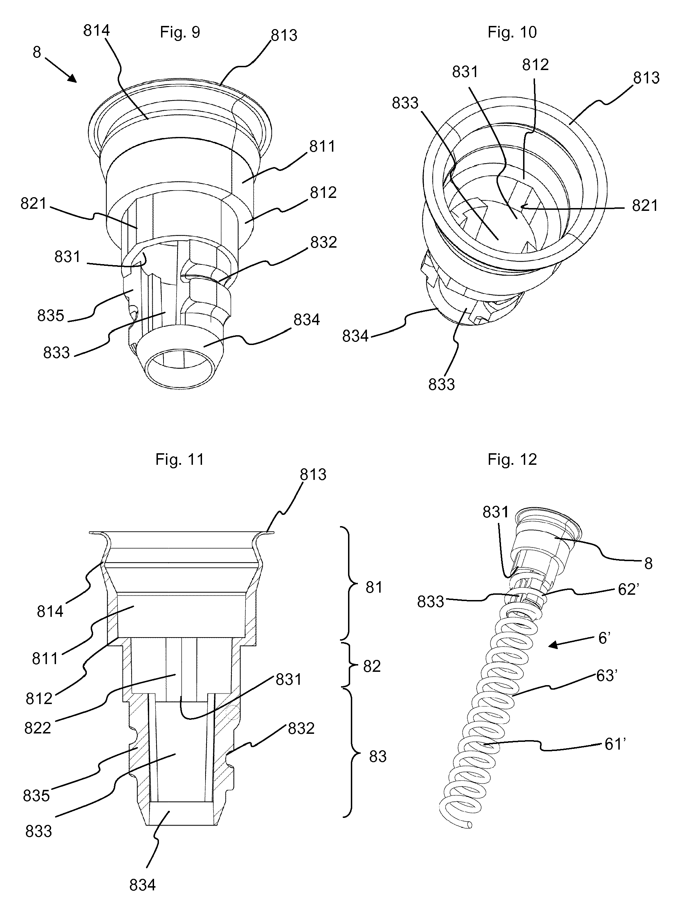

Dans l'exemple des figures 1 et 12, les moyens anti-affaissement sont constitués par un ressort (6, 6') fixé à la bague de fixation (1, 8). Le ressort (6, 6') est réalisé par exemple dans du métal ou du plastique. Quelles que soient les contraintes externes, ses spires sont non jointives. Il se forme ainsi tout le long du ressort un long passage hélicoïdal (63, 63') continu qui s'étend sur toute la longueur du ressort et qui met en contact l'intérieur de la poche (2) et le canal central (61, 61') du ressort qui est ainsi accessible de tous les côtés. Pour la fixation du ressort (6, 6'), on peut prévoir un filetage (132, 832) sur le tenon (13, 83) pour permettre le vissage de la partie supérieure (62, 62') du ressort (6, 6'). Dans le cas de la deuxième bague, le filetage (832) est réalisé sur les parois (835) du tenon et les spires supérieures du ressort (6') passent par-dessus les fentes longitudinales (833). Elles empêchent que la poche ne pénètre à l'intérieur de la bague en passant par les fentes longitudinales. Elles ne gênent cependant pas le flux du produit à travers les fentes longitudinales.

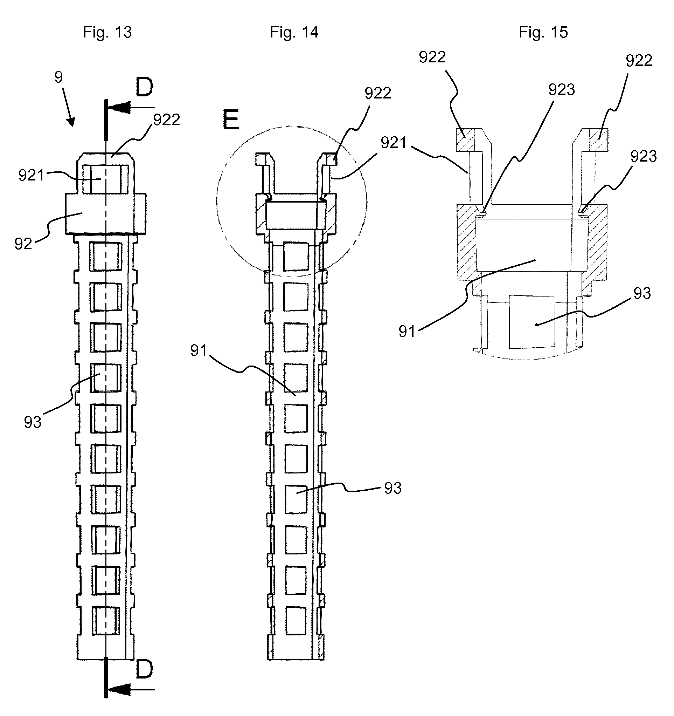

Une autre solution consiste à utiliser un tube ajouré (9), tel qu'il est représenté aux figures 13 à 15 notamment. Ce tube est traversé en son centre par un canal central (91) transpercé sur toute sa longueur et toute sa périphérie par des perforations (93). Seule la partie supérieure destinée à la fixation sur la bague est exempte de perforations. Le tube ajouré (9) est particulièrement conçu pour la bague (8) du deuxième mode de réalisation. Il est muni dans sa partie supérieure (92) de deux fenêtres (921) qui viennent s'encastrer dans les fentes longitudinales (833) du tenon (83) de la bague (2). Ces fenêtres ont pour fonction d'une part un alignement du tube sur la bague (8) lors du montage et d'autre part, grâce à leurs barres supérieures transversales (922), d'empêcher la poche (2) de pénétrer dans les fentes. Les deux fenêtres assurent également un soutien latéral du tube sur le tenon. Elles ne gênent pas le passage du produit via les fentes longitudinales (833). Deux épaulements (923) sont également prévus dans la partie inférieure des fenêtres (921) pour venir s'encliqueter derrière l'anneau d'extrémité (834) du tenon qui joue le rôle d'épaulement complémentaire aux épaulements (923) du tube. Cette fois, les moyens anti-affaissement ne sont pas vissés sur le tenon, mais encliquetés dessus.

La longueur du ressort (6, 6') ou du tube (9) est choisie en fonction de la longueur de la poche (2) dans laquelle ils doivent être utilisés. Ils doivent être suffisamment longs pour éviter le recroquevillement de la poche et la formation de zones isolées. Le ressort, et avec lui la fente hélicoïdale, ou le tube et ses perforations, s'étendent sur une grande portion de la hauteur de la poche. Grâce aux moyens anti-affaissement, la poche est maintenue sensiblement droite durant toute la durée de vie du flacon, évitant ainsi la formation de zones isolées qui ne pourraient ne pas se vider. Même si la poche vient dans certaines zones se coller contre le ressort (6, 6') ou le tube (9), la fente hélicoïdale ou les perforations restent ouvertes partout ailleurs. Le risque que la fente ou la totalité des perforations soit totalement bouchée par la poche venue se coller contre elle est pratiquement nul. Il faut noter que dans les figures 1 et 16, les dimensions choisies pour les moyens anti-affaissement (6, 6', 9) et la poche (2) n'ont qu'une valeur d'exemple.

Les moyens anti-affaissement (6, 6', 9) peuvent être fixés non seulement sur la bague de fixation comme celle présentée ici, mais également directement sur le boîtier (4) ou sur une valve ou une pompe munie d'un tenon de fixation pour un tube plongeur ou un moyen anti-affaissement traditionnel.

La bague (1, 8) est utilisée de la façon suivante. La poche (2) est fixée par tout moyen approprié sur la zone de fixation de la bague (1, 8) qui peut être préalablement munie de moyens anti-affaissement ou d'un tube plongeur. En général, la fixation de la poche sur la bague se fera par soudage. Il est préférable ensuite de rouler ou de replier la poche sur elle-même et de la maintenir dans cette position par des moyens de retenue, tels que des bandes autocollantes. Ces moyens de retenue seront conçus pour céder facilement lors du remplissage de la poche. En général, on prévoit des zones de faiblesses comme des découpages en pointillés. Cette unité bague / poche ou bague / poche / moyen anti-affaissement ou tube plongeur constitue une pièce fabriquée sur un premier site. Cette pièce est en général livrée au site d'embouteillage au même titre que le flacon ou la valve sur sa coupelle.

Lors de l'embouteillage, la poche et la bague, le cas échéant munie des moyens anti-affaissement, sont introduites dans le boîtier de telle sorte que la collerette (113, 813) de la bague vienne en appui sur le col du boîtier (4), ici le bord roulé de l'ouverture du dôme (41), et que la gorge annulaire (114, 814) passe en dessous du col du boîtier (4) en encliquetant la bague sur le boitier. Le produit est ensuite versé via la bague (1, 8) dans la poche (2) qui se déploie après que les moyens de retenue ont cédé sous la pression du produit entrant. La figure 18 montre cette étape. La tête de remplissage (7) est introduite dans le canal central (122, 822) au niveau de la partie cylindrique (11, 81). La tête de remplissage comporte deux moyens d'étanchéité distincts: une bride radiale (71) qui vient appuyer fermement la collerette (113, 813) de la bague (1, 8) contre le col du boîtier (4) et un joint d'étanchéité (72) qui vient se plaquer contre la face intérieure de l'élément cylindrique (11). L'écrasement de la collerette (113, 813) de la bague contre le col du flacon par la tête de remplissage (7) assure non seulement l'étanchéité vis-à-vis de l'extérieur, mais également le maintien en place de la bague (1, 8) qui ainsi ne risque pas de glisser dans le récipient lors du remplissage. Le produit pénètre dans la poche via le canal de distribution (73). Le produit circule de ce canal de distribution (73) dans le canal central (122, 822) de la partie cylindrique, de l'oeillet (12, 82) et du tenon (13, 83), puis dans la poche via les ouvertures (131, 831) à la jonction oeillet/tenon, les fentes longitudinales (833) situées dans le tenon lorsqu'il y en a, la fente hélicoïdale (63, 63') du ressort ou les perforations (93) du tube ajouré.

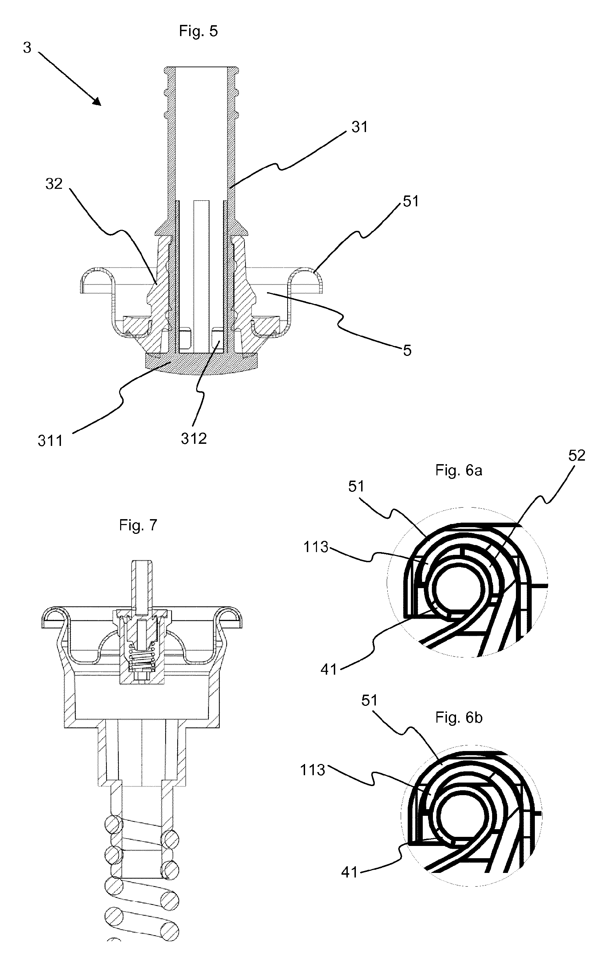

Lorsque le remplissage est fini, les moyens d'extraction, ici la valve (3) montée sur la coupelle (5), sont mis en place avec leur bord extérieur (51) placé sur le bord roulé du dôme (41). La collerette (113, 813) de la bague se trouve ainsi prise en sandwich entre le bord roulé de l'ouverture du dôme et le bord extérieur en forme de gorge (51) de la coupelle. La coupelle (5) est sertie sur le dôme bloquant ainsi la collerette (113, 813). Le sertissage de la collerette entre le dôme (41) et la coupelle (5) assure une séparation étanche entre l'intérieur de la poche (2) et l'espace réservé au gaz compris entre la poche et le boîtier (4). Dans certains cas, on pourra prévoir un joint d'étanchéité (52) par exemple dans le fond de la gorge de sertissage (51) de la coupelle ou entre le dôme (41) et le dessous de la collerette (113), solution retenue à la figure 6a.

Le gaz est introduit par le fond (43) du boîtier de façon connue. Il est également possible d'introduire le gaz avant ou après le remplissage du produit en passant sous la collerette (113, 813).

Il est bien entendu également possible de remplir le flacon entièrement monté via la valve lorsque le produit le permet.

La bague de l'invention (1, 8) peut être utilisée non seulement avec des valves qui par leur conception ne permettent pas la fixation d'une poche, comme c'est le cas de la valve gros débit représentée ici, mais également avec des valves qui en principe permettraient la fixation de la poche directement sur le corps de valve. Cela autorise le remplissage de la poche via la bague (1, 8) plutôt que via la valve. Le diamètre du passage de remplissage étant nettement plus important, le remplissage est facilité et plus rapide.

Comme le montrent les figures 6a et 6b, la bague n'est pas fixée à la coupelle. Autrement dit, il n'est pas nécessaire de former le chapeau (11, 81) en fonction de la coupelle. Seul le diamètre de la collerette doit être compatible avec celui du col du boîtier et celui des moyens de fixation de la coupelle. Ce diamètre est souvent normé de sorte que quelques modèles de différents diamètres suffisent pour couvrir la plus part des besoins, sans qu'il soit nécessaire d'adapter les dimensions et la forme du chapeau à celles de la coupelle.

On observera sur les figures que la partie supérieure (111, 811) du chapeau (11, 81), dite « partie cylindrique », peut être d'une autre forme, et notamment être de forme tronconique. L'homme du métier comprendra qu'il est possible d'obtenir le même résultat en prévoyant une gorge radiale dans une paroi tronconique dont le diamètre diminue en allant vers le bas. Il est alors possible de généraliser la « partie cylindrique » par « partie tubulaire supérieure ».

La bague est de préférence réalisée en PEHD (polyéthylène haute densité). D'autres matières sont également bien adaptées, telles que le PEBD (polyéthylène basse densité), le PP (polypropylène), le PET (polyéthylène téréphtalate), le POM (polyoxyméthylène), etc.

**Liste des références :**

| | | | | | | | |
|---|---|---|---|---|---|---|---|
| 1 | 1^{ère} | Bague de fixation | | 8 | 2^{ème} | bague de fixation | |
| | 11 | Chapeau | | | 81 | Chapeau | |
| | | 111 | Partie cylindrique/supérieure | | | 811 | Partie cylindrique/supérieure |
| | | 112 | Fond | | | 812 | Fond |
| | | 113 | Collerette | | | 813 | Collerette |
| | | 114 | Gorge radiale | | 814 | Gorge radiale | |
| | 12 | OEillet | | 82 | OEillet | | |
| | | 121 | Ailettes | | 821 | Ailettes | |
| | | 122 | Canal central | | 822 | Canal central | |
| | 13 | Tenon | | 83 | Tenon | | |
| | | 131 | Ouvertures | | 831 | Ouvertures | |
| | | 132 | Filetage | | 832 | Filetage | |
| | | | | | 833 | Fentes longitudinales | |
| | | | | | 834 | Anneau d'extrémité | |
| | | | | | 835 | Parois | |
| 2 | Poche | | | | | | |
| 3 | Moyens d'extraction (valve gros débit) | | | | | | |
| | 31 | Tige | | | | | |
| | | 311 | Fond de la tige | | | | |
| | | 312 | Ouvertures | | | | |
| | 32 | Grommet | | | | | |
| 4 | Boîtier | | | | | | |
| | 41 | Dôme | | | | | |
| | 42 | Partie cylindrique | | | | | |
| | 43 | Fond | | | | | |
| 5 | Coupelle | | | | | | |
| | 51 | Gorge de sertissage | | | | | |
| | 52 | Joint d'étanchéité | | | | | |
| 6 | Moyens antiaffaissement (ressort) | | | | | | |
| | 61 | Canal central des moyens antiaffaissement | | | | | |
| | 62 | Extrémité pour la fixation des moyens antiaffaissement | | | | | |
| | 63 | Fente hélicoïdale dans l'espace interspire | | | | | |
| 7 | Tête de remplissage | | | | | | |
| | 71 | Bride radiale | | | | | |
| | 72 | Joint d'étanchéité | | | | | |
| | 73 | Canal de distribution | | | | | |
| 9 | Moyens anti-affaissement (tube ajouré) | | | | | | |
| | 91 | Canal central des moyens anti-affaissement | | | | | |
| | 92 | Extrémité pour la fixation des moyens anti-affaissement | | | | | |
| | | 921 | Fenêtres | | | | |
| | | 922 | Barres supérieures des fenêtres | | | | |
| | | 923 | Épaulements | | | | |
| | 93 | Perforations dans le tube | | | | | |

## Revendications

1. Bague de fixation (1, 8) pour fixer une poche (2) dans un récipient (4) constitué d'un flacon (41, 42, 43) muni d'une ouverture supérieure pouvant être fermée par des moyens d'extraction (3) éventuellement montés sur une coupelle (5), la bague étant munie
- d'une première partie dite chapeau (11, 81) munie d'une partie tubulaire supérieure (111, 811), de préférence cylindrique, dont l'extrémité inférieure est en partie fermée par un fond (112, 812), et qui est munie d'une collerette (113, 813) s'écartant vers l'extérieur et dimensionnée pour prendre appui contre l'ouverture supérieure (41) du flacon et être coincée entre l'ouverture supérieure du flacon et le bord extérieur des moyens d'extraction (3) ou le bord extérieur (51) de la coupelle (5) munie des moyens d'extraction (3) lors du conditionnement du récipient,
- d'un tenon (13, 83) pour fixer des moyens anti-affaissement (6, 6', 9) ou un tube plongeur, la section transversale dudit tenon (13, 83) étant inférieure à la section transversale de la première partie (11, 81) 15 - la première partie (11, 81) se prolongeant à partir du fond (112, 812) par un oeillet (12, 82) prévu entre la partie tubulaire supérieure (111, 811) et le tenon (13, 83), la section transversale dudit oeillet (12, 82) étant inférieure à la section transversale de la première partie (11, 81), lequel oeillet étant muni, sur sa surface extérieure, d'une partie (12, 82) pour fixer la poche (2) et qui porte des ailettes (121, 821) disposées à l'opposé l'une de l'autre par rapport à l'axe central de ladite partie (12, 82) pour fixer la poche,
**caractérisée en ce que**
- la collerette (113, 813) est placée sur l'extrémité supérieure de la partie tubulaire supérieure (111, 811),
- le tenon est placé dans le prolongement de la partie tubulaire supérieure, du côté opposé à la collerette (113, 813),
- un canal central traverse de part en part la bague depuis la collerette (113, 813) jusqu'à l'extrémité libre du tenon (13, 83),
- l'oeillet (12, 82) se prolonge à l'opposé de la première partie par le tenon (13, 83),
- des ouvertures (131, 831) sont prévues dans la partie inférieure des ailettes (121, 821), à la jonction entre la partie pour fixer la poche (12, 82) et le tenon (13, 83), pour mettre en contact l'intérieur de la bague, donc le canal central, et l'extérieure de la bague.

2. Bague (1, 8) selon la revendication précédente, **caractérisée en ce que** la section transversale du canal central au niveau de l'oeillet (12, 82) présente la même section que la section extérieure de l'oeillet.

3. Bague (1, 8) selon l'une des revendications précédentes, **caractérisée en ce que** la section transversale du tenon est inférieure à la section transversale de l'oeillet (12, 82).

4. Bague (1, 8) selon l'une des revendications précédentes, **caractérisée en ce que** la partie tubulaire supérieure (111, 811) comprend une gorge annulaire radiale (114, 814) dimensionnée pour permettre l'encliquetage de la bague sur l'ouverture supérieure (41) du flacon.

5. Bague (8) selon l'une des revendications précédentes, **caractérisée en ce qu**'une ou plusieurs fentes longitudinales (833) sont prévues dans le tenon (83), lesquelles fentes commencent de préférence au niveau de la jonction entre la partie pour fixer la poche (82) et le tenon (83), de préférence dans le prolongement des ouvertures (131, 831) situées dans la partie inférieure des ailettes.

6. Bague (1, 8) selon l'une des revendications précédentes, **caractérisée en ce que** le tenon (13, 83) est muni de moyens pour fixer un tube plongeur ou un dispositif anti-affaissement (6, 6', 9).

7. Bague (1, 8) selon la revendication précédente, **caractérisée en ce que** les moyens de fixation pour un tube plongeur ou un dispositif anti-affaissement sont constitués par un filetage (132, 832) réalisé de préférence sur la face extérieure du tenon (13, 83).

8. Bague (8) selon la revendication 6, **caractérisée en ce que** les moyens de fixation pour un tube plongeur ou un dispositif anti-affaissement (9) sont constitués par un épaulement, de préférence un anneau d'extrémité (834).

9. Bague (1, 8) selon l'une des revendications précédentes, **caractérisée en ce qu**'elle est munie d'un tube plongeur ou de moyens anti-affaissement (6, 6', 9), le tube plongeur ou les moyens anti-affaissement présentant un canal central (61, 61', 91) dont une extrémité (62, 62', 92) peut être munie de moyens pour les fixer à la bague de sorte que le canal central (61, 61', 91), à l'état monté dans un flacon, soit en contact avec l'intérieur de la bague et les moyens d'extraction.

10. Bague (1, 8) selon la revendication précédente, **caractérisée en ce que** les moyens anti-affaissement sont constitués par un ressort hélicoïdal (6, 6') aux spires écartées les unes des autres de sorte à former une fente hélicoïdale (63, 63') tout le long du ressort mettant en contact l'intérieur du canal central (61, 61') formé par le ressort et l'extérieur du ressort, les spires restant non jointives quelles que soient les contraintes externes auxquelles est soumis le ressort lors d'un usage conforme.

11. Bague (1, 8) selon la revendication 9, **caractérisée en ce que** les moyens anti-affaissement sont constitués par un tube ajouré (9) muni sur au moins une partie de sa longueur et une partie de sa périphérie de perforations (93) qui mettent en contact l'intérieur du canal central (91) et l'extérieur du tube ajouré, des moyens de fixation (92) étant de préférence prévus à l'une de ses extrémités pour le fixer au tenon (83) de la bague.

12. Bague (1, 8) selon l'une des revendications précédentes, **caractérisée en ce qu**'une poche (2) est fixée à la bague, de préférence par soudage, de sorte à former une jonction étanche.

## Patentansprüche

1. Befestigungsring (1, 8) zum Befestigen eines Beutels (2) in einem Behälter (4), der von einem mit einer oberen Öffnung versehenen Flakon (41, 42, 43) gebildet wird, welche Öffnung durch gegebenenfalls auf einem Ventilteller (5) montierte Extraktionsmittel (3) verschließbar ist, wobei der Befestigungsring versehen ist mit
- einem ersten Teil, der Aufsatz (11, 81) genannt wird, der mit einem oberen, vorzugsweise zylindrischen rohrförmigen Teil (111, 811), versehen ist, dessen unteres Ende zum Teil durch einen Boden (112, 812) verschlossen ist und der mit einem Ringflansch (113, 118) versehen ist, der sich nach außen hin erstreckt und dimensioniert ist, um sich an der oberen Öffnung (41) des Flakons abzustützen und zwischen der oberen Öffnung des Flakons und dem äußeren Rand der Extraktionsmittel (3) oder dem äußeren Rand (51) des Ventiltellers (5), der mit den Extraktionsmitteln (3) versehen ist, während des Befüllens des Behälters verklemmt zu werden,
- einem Zapfen (13, 83), um Mittel zum Schutz vor dem Zusammenfallen (6, 6', 9) oder ein Tauchrohr zu befestigen, wobei der Querschnitt des Zapfens (13, 81) kleiner ist als der Querschnitt des ersten Teils (11, 81),
- wobei der erste Teil (11,81) sich vom Boden (112, 812) in eine Öse (12, 82) fortsetzt, die zwischen dem oberen rohrförmigen Teil (111, 811) und dem Zapfen (13, 83) vorgesehen ist, wobei der Querschnitt der Öse (12, 82) kleiner ist als der Querschnitt des ersten Teils (11, 81), wobei die Öse an ihrer Außenseite mit einem Teil (12, 82) versehen ist, um den Beutel (2) zu befestigen und die Flügel (121, 821) aufweist, die relativ zur Hauptachse des Teils (12, 82) zum Befestigen des Bauteils einander gegenüberliegend angeordnet sind,
**dadurch gekennzeichnet, dass**
- der Ringflansch (113, 813) auf dem oberen Ende des oberen rohrförmigen Teils (111, 811) angeordnet ist,
- der Zapfen in der Verlängerung des oberen rohrförmigen Teils auf der entgegengesetzten Seite des Ringflansches (113, 813) angeordnet ist,
- ein mittiger Kanal den Ring von dem Ringflansch (113, 813) bis zum freien Ende des Zapfens (13, 83) durchquert,
- die Öse (12, 82) sich auf der entgegengesetzten Seite des ersten Teils in den Zapfen (13, 83) fortsetzt,
- Öffnungen (131, 831) in dem unteren Teil der Flügel (121, 821) an der Verbindung zwischen dem Teil (12, 82) zum Befestigen des Beutels und dem Zapfen (13, 83) vorgesehen sind, um den Innenbereich des Rings, also den mittigen Kanal, und den Außenbereich des Rings in Kontakt zu bringen.

2. Ring (1, 8) gemäß dem Patentanspruch 1, **dadurch gekennzeichnet dass** der Querschnitt des mittigen Kanals im Bereich der Öse (12, 82) den gleichen Querschnitt wie der äußere Querschnitt der Öse aufweist.

3. Ring (1, 8) gemäß einem den vorhergehenden Patentansprüche, **dadurch gekennzeichnet dass** der Querschnitt des Zapfens kleiner als der Querschnitt der Öse (12, 82) ist.

4. Ring (1, 8) gemäß einem den vorhergehenden Patentansprüche, **dadurch gekennzeichnet dass** das rohrförmige obere Teil (111, 811) eine radiale ringförmige Einschnürung (114, 814) umfasst, die dimensioniert ist, um das Einrasten des Rings an der oberen Öffnung (41) des Flakons zu ermöglichen.

5. Ring (8) gemäß einem den vorhergehenden Patentansprüche, **dadurch gekennzeichnet dass** ein oder mehrere Längsschlitze (833) in dem Zapfen (83) vorgesehen sind, wobei die Schlitze vorzugsweise im Bereich der Verbindung zwischen dem Teil (82) zum Befestigen des Beutels und dem Zapfen (83) beginnen, und zwar vorzugsweise in der Verlängerung der Öffnungen (131, 831), die sich im unteren Teil der Flügel befinden.

6. Ring (1, 8) gemäß einem den vorhergehenden Patentansprüche, **dadurch gekennzeichnet dass** der Zapfen (13, 83) mit Mitteln zum Befestigen eines Tauchrohres oder einer Vorrichtung für den Schutz vor dem Zusammenfallen (6, 6', 9) versehen ist.

7. Ring (1, 8) gemäß dem vorhergehenden Patentanspruch, **dadurch gekennzeichnet dass** die Befestigungsmittel zum Befestigen eines Tauchrohres oder einer Vorrichtung für den Schutz vor dem Zusammenfallen in Form eines Gewindes (132, 832) ausgebildet sind, das vorzugsweise auf der Außenseite des Zapfens (13, 83) hergestellt ist.

8. Ring (8) gemäß dem Patentanspruch 6, **dadurch gekennzeichnet dass** die Befestigungsmittel zum Befestigen eines Tauchrohres oder einer Vorrichtung für den Schutz vor dem Zusammenfallen (9) in Form einer Schulter ausgebildet sind, vorzugsweise eines Endrings (834).

9. Ring (1, 8) gemäß einem den vorhergehenden Patentansprüche, **dadurch gekennzeichnet dass** der Ring mit einem Tauchrohr oder Mitteln für den Schutz vor dem Zusammenfallen (6, 6', 9) versehen ist, wobei das Tauchrohr oder die Mittel für den Schutz vor dem Zusammenfallen einen mittigen Kanal (61, 61', 91) aufweisen, von dem ein Ende (62 62', 92) mit Mitteln versehen sein kann, um sie am Ring so zu befestigen, dass der mittige Kanal (61, 61', 91) im montierten Zustand in einem Flakon mit dem Inneren des Rings und mit dem Extraktionsmitteln in Kontakt ist.

10. Ring (1, 8) gemäß dem vorhergehenden Patentanspruch, **dadurch gekennzeichnet dass** die Mittel für den Schutz vor dem Zusammenfallen von einer Schraubenfeder (6, 6') mit auseinander liegenden Windungen gebildet sind, so dass ein schraubenförmiger Schlitz (63, 63') über die ganze Länge der Feder geformt wird, der den Innenbereich des von der Feder gebildeten mittigen Kanals (61, 61') mit dem Außenbereich der Feder in Kontakt bringt, wobei die Windungen unabhängig von den äußeren Kräfteeinwirkungen, denen die Feder bei einem bestimmungsgemäßen Einsatz ausgesetzt ist, nicht zum Aneinanderliegen kommen.

11. Ring (1, 8) gemäß dem Patentanspruch 9, **dadurch gekennzeichnet dass** die Mittel für den Schutz vor dem Zusammenfallen von einem durchbrochenen Rohr (9) gebildet werden, das mindestens auf einem Teil seiner Länge und einem Teil seines Umfangs mit Perforationen (93) versehen ist, die den Innenbereich des mittigen Kanals (91) und den Außenbereich des durchbrochenen Rohres in Kontakt bringen, wobei vorzugsweise an einem seiner Enden Befestigungsmittel (92) für dessen Befestigung am Zapfen (83) des Rings vorgesehen sind.

12. Ring (1, 8) gemäß einem der vorhergehenden Patentansprüche, **dadurch gekennzeichnet dass** ein Beutel (2) auf dem Ring befestigt ist, vorzugsweise durch Schweißen, um eine dichte Verbindung zu schaffen.

## Claims

1. Fastening ring (1, 8) for fastening a pouch (2) in a container (4) made up of a bottle (41, 42, 43) provided with an upper opening closeable by extraction means (3) optionally mounted on a cup (5), wherein the ring is provided with
- a first portion called cap (11, 81) provided with an upper tubular portion (111, 811), preferably cylindrical, whose lower end is partially closed by a bottom (112, 812), and provided with an outwardly projecting flange (113, 813) dimensioned to bear against the upper opening (41) of the bottle and to be clamped between the upper opening of the bottle and the outer edge of the extraction means (3) or the outer edge (51) of the cup (5) equipped with the extraction means (3) during packaging of the container,
- a tenon (13, 83) for fastening anti-collapse means (6, 6', 9) or an immersion tube, wherein the transverse cross-section of said tenon (13, 83) is smaller than the transverse cross-section of first portion (11, 81),
- which first portion (11, 81) is extended from the bottom (112, 812) by an eyelet (12, 82) provided between the upper tubular portion (111, 811) and the tenon (13, 83), wherein the transverse cross-section of said eyelet (12, 82) is smaller than the transverse cross-section of first portion (11, 81), which eyelet is provided on its outer surface with a portion (12, 82) for fastening the pouch (2) and bears fins (121, 821) disposed opposite one another relative to the central axis of said portion (12, 82) for fastening the pouch,
**characterised in that**
- the flange (113, 813) is located on the upper end of the upper tubular portion (111, 811),
- the tenon is positioned in the extension of the upper tubular portion, on the side opposite to the flange (113, 813),
- a central channel passes right through the ring from the flange (113, 813) to the free end of the tenon (13, 83),
- the eyelet (12, 82) extends opposite to the first portion by the tenon (13, 83),
- openings (131, 831) are provided in the lower portion of the fins (121, 821), at the junction between the portion for fastening the pouch (12, 82) and the tenon (13, 83), for setting the inside of the ring, thus the central channel, and the outside of the ring in contact with each other.

2. Ring (1, 8) according to the preceding claim, **characterised in that,** the transverse cross-section of the central channel at the level of the eyelet (12, 82) has the same cross-section as the outer cross-section of the eyelet.

3. Ring (1, 8) according to one of the preceding claims, **characterised in that,** the transverse cross-section of the tenon is smaller than the transverse cross-section of the eyelet (12, 82).

4. Ring (1, 8) according to one of the preceding claims, **characterised in that** the upper tubular portion (111, 811) comprises a radial annular groove (114, 814) dimensioned to allow snapping the ring onto the upper opening (41) of the bottle.

5. Ring (8) according to one of the preceding claims, **characterised in that** one or several longitudinal slots (833) are provided in the tenon (83), said slots preferably starting at the level of the junction between the portion for fastening the pouch (82) and the tenon (83), preferably in the extension of the openings (131, 831) located at the lower portion of the fins.

6. Ring (1, 8) according to claim one of the preceding claims, **characterised in that** the tenon (13, 83) is provided with means for fastening an immersion tube or an anti-collapse device (6, 6', 9).

7. Ring (1, 8) according to the preceding claim, **characterised in that** the means for fastening an immersion tube or an anti-collapse device are formed by a thread (132, 832), preferably formed on the outer side of the tenon (13, 83).

8. Ring (8) according to claim 7, **characterised in that** the means for fastening an immersion tube or anti-collapse means (9) are formed by a shoulder, preferably an end ring (834).

9. Ring (1, 8) according to one of the preceding claims, **characterised in that** it is provided with an immersion tube or anti-collapse means (6, 6', 9), the immersion tube or the anti-collapse means having a central channel (61, 61', 91), one end (62, 62', 92) of which can be provided with means for fastening them to the ring so that the central channel (61, 61', 91), in the state mounted in a bottle, is in contact with the inside of the ring and the extraction means.

10. Ring (1, 8) according to the preceding claim, **characterised in that** the anti-collapse means are formed by a helical spring (6, 6') having coils spaced from one another so as to form a helical slot (63, 63') all along the spring, setting the inside of the central channel (61, 61') formed by the spring and the outside of the spring in contact with each other, the coils remaining non-contiguous whatever the external constraints to which the spring is subjected during normal use.

11. Ring (1, 8) according to claim 9, **characterised in that** the anti-collapse means are formed by a perforated tube (9) provided on at least a portion of its length and a portion of its periphery with perforations (93) which set the inside of the central channel (91) and the outside of the perforated tube in contact with each other, fastening means (92) being preferably provided at one of its ends to fasten it to the tenon (83) of the ring.

12. Ring (1, 8) according to claim one of the preceding claims, **characterised in that** a pouch (2) is fastened to the ring, preferably by welding, so as to form a sealed junction.
